# EUROPEAN PATENT SPECIFICATION

(11) **EP 0 897 828 B1**
(45) Date of publication and mention of the grant of the patent: **11.12.2002**
(21) Application number: 98115544.3
(22) Date of filing: 18.08.1998
(51) Int. Cl.: B60Q 1/068, B60Q 1/00

(54) **Integrated optical assembly comprising a lighting headlight and a direction indicator light for a vehicle**
Integrierter, optischer Block mit Scheinwerfer und Richtungsanzeiger für Kraftfahrzeuge
Bloc optique intégré comprenant une phare et un indicateur de direction pour véhicule

(30) Priority: 22.08.1997 IT TO970754
(43) Date of publication of application: 24.02.1999
(73) Proprietor: Automotive Lighting Italia Spa, 10078 Venaria Reale (Torino) (IT)
(72) Inventor: Ressia, Alessio, 10073 Cirié (IT)
(74) Representative: Eccetto, Mauro

(56) References cited:
- EP-A- 0 768 206
- DE-A- 19 508 472
- DE-C- 4 342 882
- FR-A- 2 629 566
- GB-A- 2 248 293

## Description

The present invention relates to an integrated optical assembly of a lighting headlight and direction indicator light for a vehicle, particularly suited for application as a front optical assembly on a motor vehicle.

Motor vehicle optical assemblies are known, particularly for the front, in which a single body houses either a lighting headlight or a direction indicator light. The known solutions have the direction indicator light integrated in the aesthetic corner of the headlight, being a component separate from the head light and thus in addition to having its own light source, having its own reflecting surface. Headlights are also known in which the indicator light is integrated into the headlight body, but nevertheless has a reflecting surface separate from the main reflector of the headlight itself.

In the prior art the reflecting surface of a vehicle headlight is normally moveable to allow correct orientation of the luminous beam according to the vehicle load conditions. For that purpose the reflector is moveable either in a horizontal plane or in a vertical plane. In this case the direction indicator light does not require seating adjustments and therefore has a fixed reflecting surface in relation to the light source.

If the two reflecting surfaces, of the headlight and of the indicator light, are built within the same moving component as it is done in the generic document GB-A-2248293, adjusting the seat of the headlight would also modify the orientation of the reflecting surface of the indicator light in relation to the relevant light source, with consequent defocalising of the indicator lights, if they are not mounted directly on the reflecting surface.

Furthermore, in order to adjust the headlight and the indicator light separately, separate reflecting surfaces are required, with high production and assembly costs.

The purpose of the present invention is to provide an integrated optical assembly comprising a headlight and an indicator light which is free from the disadvantages described above; in particular a purpose of the invention is to provide an integrated optical assembly which is simple and economical in production, wherein the reflecting surfaces of the headlight and the indicator light are provided on the same reflector component, thus reducing or eliminating the defocalising of the indicator light due to eventual headlight adjustments.

The present invention thus relates to an optical integrated assembly of a headlight and a direction indicator light for a vehicle, comprising a main body enclosed by a transparent screen, a first light source for the lighting headlight and a second light source for the direction indicator light, each housed inside the main body and respectively having a first and a second reflecting surface, able to diffuse light beams emitted by the sources in predetermined directions, and control means for the orientation of the first reflecting surface in relation to the first light source; whereby the reflecting surfaces are integrally connected being two portions of a single reflector component, moveable in relation to the main body and to the first light source.

In particular, the control means comprise at least a ball joint defining a rotation fulcrum for the reflector component, able to allow the rotation thereof in two orthogonal planes, and cooperating with the reflector component in at least a first and a second securing point, these forming together with the rotation fulcrum of the reflector component the corners of a triangle; the light source being located in a focal point of the second reflecting surface, said focal point being in line with the rotation fulcrum of the reflector component and with a first securing point along an axis of rotation of the reflector component.

Preferably, the rotation fulcrum of the reflector component is located on an axis including the first securing point and the focal point of the second reflecting surface and between the first securing point and the focal point of the second reflecting surface, closer to the latter.

According to a preferred implementation form, the said first and second light sources are respectively carried by a first and a second support component, each integral with the main body, and extend in overhang from the support components within a cavity defined by the main body, in the direction of the transparent screen.

According to a possible variation, the first and second light sources are respectively carried by a first and a second support component, the first support component being mounted integral on the main body, the second support component being carried integral with the reflector component; the light sources extending in overhang from the support components within a cavity defined by the main body, in the direction of the transparent screen.

In each case, the reflector component is moulded in such a way that the light emitted by the first light source strikes the first reflecting surface, whereas light emitted by the second light source strikes the second reflecting surface.

The integrated optical unit of a lighting headlight and of a direction indicator light according to the present invention is thus provided with separate light sources using a single reflector component, upon which is recessed the headlight reflecting surface and that of the direction indicator light which means a considerable simplification and reduction in manufacturing costs. At the same time the defocusing of the light emitted by the indicator light which would be caused by headlight seat adjustment is reduced to a minimum or simply eliminated.

Further characteristics and advantages of the present invention will be clear from the description which is followed by a number of non-restrictive examples with reference to the figures wherein:
- Figure 1 is an external front view of an integral assembly of a headlight and a direction indicator light according to the invention,
- Figures 2 and 3 show sections, respectively according to the plane of line II-II and III-III of the assembly in Figure 1;
- Figure 4 shows a section of a possible variant of the integrated assembly in Figure 1.

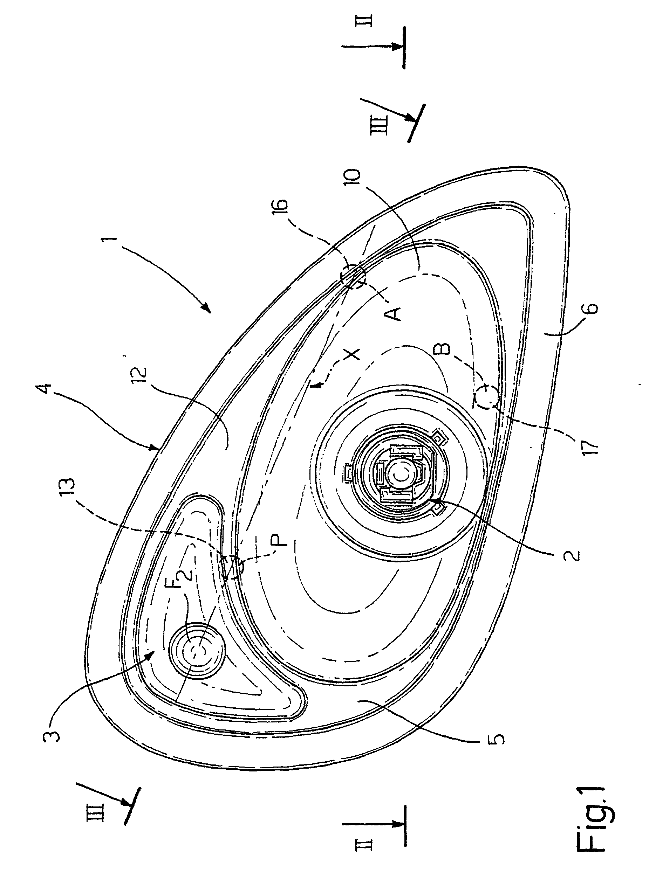

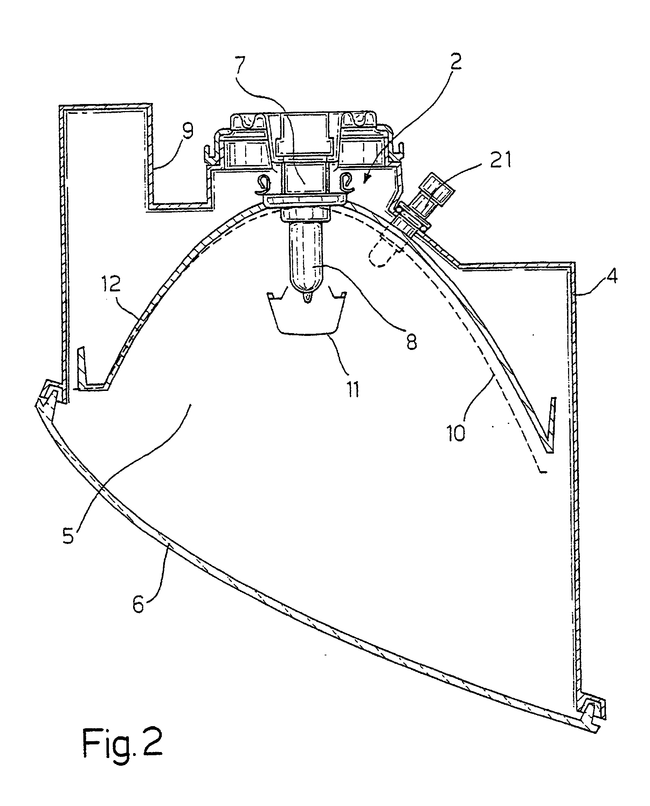

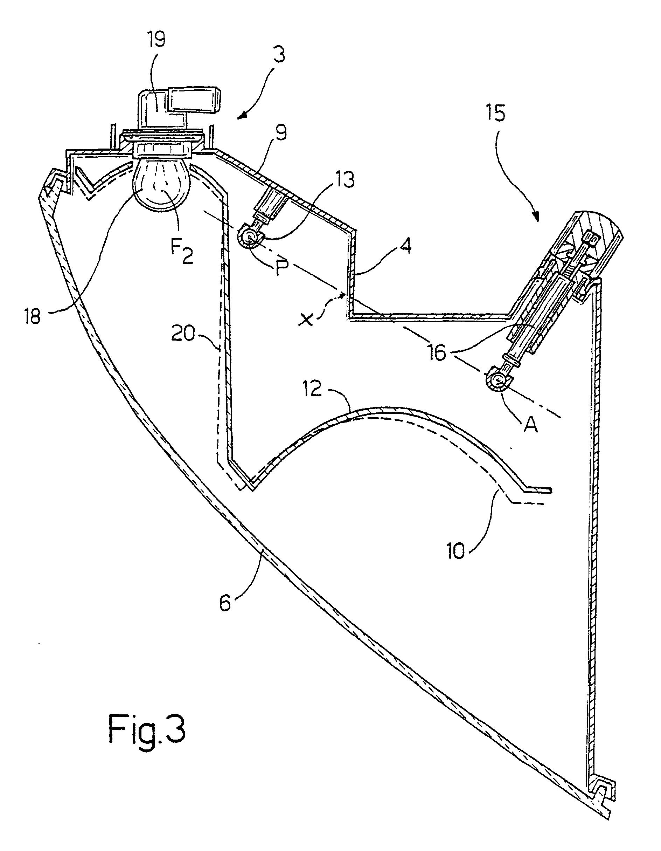

Referring to Figures 1 to 3, the assembly under reference 1 shows an integrated group consisting of a headlight 2 and a direction indicator light 3 for a vehicle; in this non-restrictive example the integrated assembly 1 forms a front right-hand optical assembly for a motor vehicle.

The assembly 1 comprises a main body 4, which defines a cavity 5 within which are housed the internal components of the assembly itself, closed by a transparent screen 6; it is obvious that the main body 4 and the transparent screen 6 may be of any desired form, also in accordance with the type of vehicle to which they are fitted.

The headlight 2 comprises a light source 8, for instance consisting of a bulb of a known type, and a reflecting surface 10, moulded and fitted to diffuse in a predetermined direction the light emitted by the light source 8. The light source 8 is carried by a support component 7 (bulb holder) which in turn is secured in a known manner to a bottom wall 9 of the body 4, and extends in overhang inside the cavity 5 in the direction of the transparent screen 6; the reflecting surface 10 has an essentially parabolic profile and the light source 8 lies in a focal point F1 of the reflector surface; the light source 8 is also provided with an opaque screen 11 which as is known has the purpose of intercepting the beams of direct light emitted by the source 8.

The reflecting surface 10 is carried by a reflector component 12, moveable in relation to the main body 4 and thereby also to the light source 8 for the purpose of changing the orientation of the light coming from the headlight 2 and to match to given load conditions of the vehicle. The integrated assembly 1 also comprises adjustment means 15 for the orientation of the reflector component 12 (and thereby of the reflecting surface 10) in relation to the light source 8; in particular the reflector 12 is connected to the main body 4 by means of a joint 13, for instance a ball joint, defining a rotation fulcrum P around which the reflector 12 can rotate. The position of the reflector 12 in relation to the main body 4 is adjusted by actuating for instance a seat adjustment means 15 of known type and of which only some essential components are illustrated schematically in the figure. In particular the orientation of the reflector 12 is modified by means of two actuators 16, 17 which cooperate with the reflector 12 at securing points A and B, which together with the rotation fulcrum P form the summits of a triangle. The reflector 12 is thus able to rotate about an axis X passing through the rotation fulcrum P and through the securing point A.

The light source 8 and the relative reflecting surface 10 represent in effect a lighting headlight 2 of conventional type, fulfilling the functions of an anti-dazzle projector and of a full beam projector.

The integrated assembly 1 also comprises a second light source 18 for a direction indicator light 3, the latter also being secured to the bottom wall 9 of the body 4 by means of a second bulb holder 19 and extending in overhang inside the cavity 5. The source 18 is located laterally on the outside and in a higher position than the source 8 of the headlight 2, but various arrangements of locating the two light sources 8, 18 are possible.

The indicator headlight 3 like the headlight 2 has its own reflecting surface 20, to diffuse the light from the source 18 in a predetermined direction.

In the case illustrated here, the optical assembly 1 comprises a further light source 21, serving as a side light, located according to a known solution close to the source 8 of the headlight 2, in an eccentric position in relation to the focal point F1 of the reflecting surface 10 of the headlight 2.

According to the present invention, the reflecting surface 20 of the indicator light 3 is carried by the reflector 12 and is therefore movable together with the reflecting surface 10 of the headlight 2 in relation to the main body 4 and thereby to the light source 18. The two reflecting surfaces 10, 20 constitute two portions of the reflector 12, which is moulded in such a way that the direct light emitted by a light source 8,18 strikes the referring reflecting surfaces 10,20.

While the light source 8 is located in the focal point F1 of the reflecting surface 10 of the headlight 2, the source 18 is in a focal point F₂ of the reflecting surface 20 of the indicator light 3.

By varying the position of the reflector 12 to vary the headlight adjustment the reflecting surface 20 is also moved. In order to avoid that as a result the light source 18 is no longer located in focal point F₂ of the corresponding reflecting surface 20, with a consequent defocalising of the light of the direction indicator 3, the focal point F₂ is located on the axis of rotation X of the reflector 12, aligned with the fulcrum P (connecting point between reflector 12 and the main body 4) and point A (point at which actuator 16 of the seat adjuster arrangement 15 cooperates with the reflector 12). In this way the rotation of reflector 12 about the axis X, effected by the adjustment of the vertical orientation of the headlight 2, does not cause any defocalising of the indicator light 3 since the relevant light source 18 stays located in the focal point of the corresponding reflecting surface 20.

The rotation fulcrum P of reflector 12, the focal point F2 and the securing point A are thus aligned along axis X. In addition, the rotation fulcrum P is also located between point A and focal point F₂. Preferably the fulcrum P is located as close as possible to focal the point F₂. In this way the defocalising of the indicator light 2 is reduced to a minimum also as a result of an horizontal adjustment of the reflector 12.

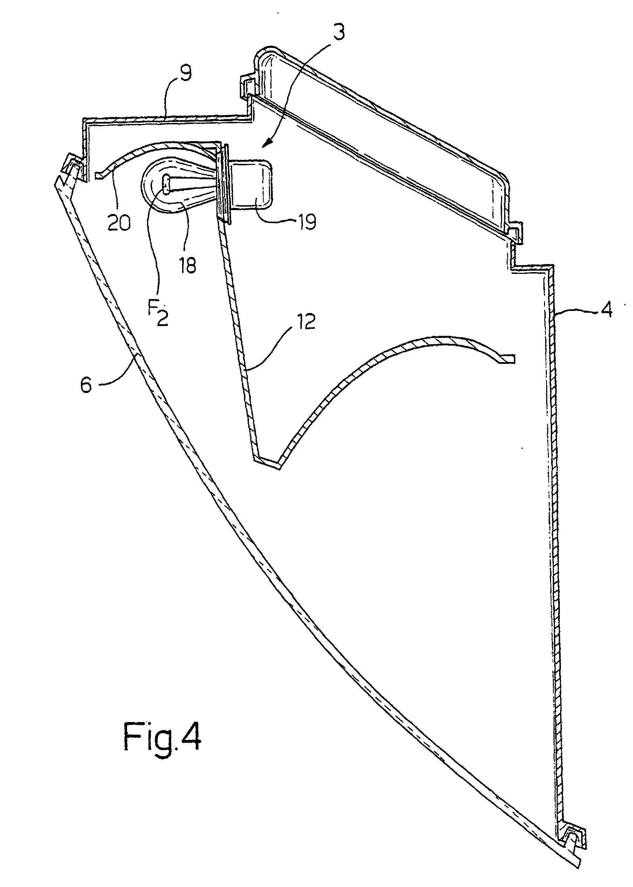

According to a possible variant, illustrated in Figure 4, in which similar or equal details as previously described carry the same reference numbers, the light source 18 of the indicator light 3 is located still to match the focal point F₂ of the reflector surface 20 in a bulb holder 19 which is mounted integral on the reflector 12 and not on the main body 4.

In this way the light source 18 of direction indicator light 3 remains in correspondence with focal point F₂ of the reflecting surface 20 as it is displaced together with the reflector 12. As a consequence any defocalising of the indicator light 3 is completely eliminated, also by the horizontal inclination of the reflector 12.

It is clear that this variant, in contrast to the solution previously described, which can be easily applied without special adaptations to conventional type optical assemblies, requires the use of electrical connection assemblies specially designed for the indicator light 3, so that the indicator light 3 in this case is moveable in relation to the main body 4.

Finally, it is intended that various modifications and variants can be applied to the integrated assembly as described without departing from the purpose of the protective scope defined in the claims.

## Claims

1. Integrated optical assembly (1) consisting of a headlight (2) and a direction indicator light (3) for a vehicle, comprising a main body (4) closed by a transparent screen (6), a first light source (8) for said headlight (2) and a second light source (18) for said direction indicator light (3), both housed inside the main body (4) and having a first reflecting surface belonging to the headlight (10) and a second (20) reflecting surface belonging to the direction indicator light, able to diffuse respective light beams emitted by the sources (8, 18) in predetermined directions, and control means (15) for the orientation of the said first reflecting surface (10) in relation to the said first light source (8), wherein the reflecting surfaces (10, 20) are integrally connected one to the other, and consist of two portions of an integral reflector component (12), which is moveable in relation to the main body (4) and the first light source (8); **characterised in that**
the control means (15) comprise at least a joint defining a rotation fulcrum (P) of the reflector component (12) able to allow the rotation of the reflector component in two planes orthogonal to each other; and by the fact that the control means (15) cooperate with the reflector component (12) in at least a first (A) and a second (B) securing point, which in combination with the rotation fulcrum (P) of the reflector component (12) form the corners of a triangle, the second light source (18) being placed at a focal point (F2) of the second reflecting surface (20), the focal point (F2) being aligned with the rotation fulcrum (P) of the reflector component (12) and with the first securing point (A) along a first axis of rotation (X) of the first reflector component (12).

2. Integrated optical assembly according to claim 1, **characterised in that** the rotation fulcrum (P) of the reflector component (12) is located on an axis (X) including the first securing point (A) and the focal point (F2) of the second reflecting surface (20) and between said first securing point (A) and the focal point (F2) of the second reflecting surface (20), closer to the latter.

3. Integrated optical assembly according to claim 1 or 2, **characterised in that** the first (8) and second (18) light sources are carried respectively by a first (7) and a second (19) support component, each integral with the main body (4), and extending in overhang from the support components (7, 19) within a cavity (5) defined by the main body (4) in the direction of the transparent screen (6).

4. Integrated optical assembly according to claims 1 or 2, **characterised in that** the first (8) and second (18) light sources are carried respectively by a first (7) and by a second (19) support component, the first support component (7) being mounted integral on the main body (4), the second support component (19) being carried integrally by the reflector component (12), the light sources (8, 18) extending in overhang from the support components (7, 19) within a cavity (5) defined by the main body (4) in the direction of the transparent screen (6).

5. Integrated optical assembly according to claims 3 or 4, **characterised in that** the reflector component (12) has such a shape that the light emitted by the first light source (8) strikes the first reflecting surface (10), whereas the light emitted by the second light source (18) strikes the said second reflecting surface (20).

## Patentansprüche

1. Integrierte optische Baueinheit (1), die aus einem Scheinwerfer (2) und aus einer Fahrtrichtungsanzeigeleuchte (3) für ein Fahrzeug besteht, umfassend einen Hauptkörper (4), der durch eine lichtdurchlässige Scheibe (6) verschlossen ist, eine erste Lichtquelle (8) für den Scheinwerfer (2) und eine zweite Lichtquelle (18) für die Fahrtrichtungsanzeigeleuchte (3), die beide in dem Hauptkörper (4) untergebracht sind und eine erste reflektierende Oberfläche (10), die zu dem Scheinwerfer gehört, sowie eine zweite reflektierende Oberfläche (20), die zu der Fahrtrichtungsanzeigeleuchte gehört, die die jeweiligen Lichtstrahlen, die von den Quellen (8, 18) ausgesendet werden, in vorgegebene Richtungen streuen können, besitzen, und Steuermittel (15), die die erste reflektierende Oberfläche (10) in bezug auf die erste Lichtquelle (8) orientieren, wobei die reflektierenden Oberflächen (10, 20) einteilig miteinander verbunden sind und aus zwei Abschnitten einer einteiligen Reflektorkomponente (12), die in bezug auf den Hauptkörper (4) und die erste Lichtquelle (8) beweglich ist, bestehen; **dadurch gekennzeichnet, daß**
die Steuermittel (15) wenigstens ein Gelenk umfassen, das einen Drehunterstützungspunkt (P) der Reflektorkomponente (12) definiert und die Drehung der Reflektorkomponente in zwei zueinander senkrechten Ebenen ermöglicht; und daß die Steuermittel (15) mit der Reflektorkomponente (12) an wenigstens einem ersten (A) und an einem zweiten (B) Befestigungspunkt zusammenwirken, die zusammen mit dem Drehunterstützungspunkt (P) der Reflektorkomponente (12) die Ecken eines Dreiecks bilden, wobei die zweite Lichtquelle (18) in einem Brennpunkt (F2) der zweiten reflektierenden Oberfläche (20) angeordnet ist, der längs einer ersten Drehachse (X) der ersten Reflektorkomponente (12) auf den Drehunterstützungspunkt (P) der Reflektorkomponente (12) und auf den ersten Befestigungspunkt (A) ausgerichtet ist.

2. Integrierte optische Baueinheit nach Anspruch 1, **dadurch gekennzeichnet, daß** sich der Drehunterstützungspunkt (P) der Reflektorkomponente (12) auf einer Achse (X), die den ersten Befestigungspunkt (A) und den Brennpunkt (F2) der zweiten reflektierenden Oberfläche (20) enthält, und zwischen dem ersten Befestigungspunkt (A) und dem Brennpunkt (F2) der zweiten reflektierenden Oberfläche (20) und näher bei dem letzteren befindet.

3. Integrierte optische Baueinheit nach Anspruch 1 oder 2, **dadurch gekennzeichnet, daß** die ersten und zweiten Lichtquellen (8, 18) von einer ersten (7) bzw. einer zweiten (19) Unterstützungskomponente, die jeweils einteilig mit dem Hauptkörper (4) ausgebildet sind, getragen werden und sich vorstehend von den Unterstützungskomponenten (7, 19) innerhalb eines durch den Hauptkörper (4) definierten Hohlraums (5) zur lichtdurchlässigen Scheibe (6) erstrecken.

4. Integrierte optische Baueinheit nach Anspruch 1 oder 2, **dadurch gekennzeichnet, daß** die ersten und zweiten Lichtquellen (8, 18) von einer ersten (7) bzw. einer zweiten (19) Unterstützungskomponente getragen werden, wobei die erste Unterstützungskomponente (7) einteilig mit dem Hauptkörper (4) ausgebildet ist und die zweite Unterstützungskomponente (19) von der Reflektorkomponente (12) in Baueinheit getragen wird, wobei sich die Lichtquellen (8, 18) vorstehend von den Unterstützungskomponenten (7, 19) innerhalb eines durch den Hauptkörper (4) definierten Hohlraums (5) zur lichtdurchlässigen Scheibe (6) erstrecken.

5. Integrierte optische Baueinheit nach den Ansprüchen 3 oder 4, **dadurch gekennzeichnet, daß** die Reflektorkomponente (12) eine Form besitzt, derart, daß das von der ersten Lichtquelle (8) ausgesendete Licht auf die erste reflektierende Oberfläche (10) auftrifft, während das von der zweiten Lichtquelle (18) ausgesendete Licht auf die zweite reflektierende Oberfläche (20) auftrifft.

## Revendications

1. Ensemble optique intégré (1) se compose d'un projecteur (2) et d'un feu indicateur de direction (3) pour véhicule, comprenant un boîtier principal (4) fermé par un écran transparent (6), une première source de lumière (8) pour ledit projecteur (2) et une seconde source de lumière (18) pour ledit indicateur de direction (3), les deux étant logées dans le boîtier principal (4) et comprenant une première surface réfléchissante (10) relative au projecteur et une seconde surface réfléchissante (20) relative à l'indicateur de direction, les deux surfaces étant capables de diffuser leurs faisceaux de lumière respectifs émis par les sources (8, 18) dans des directions prédéterminées, et des moyens de commande (15) pour l'orientation de la première surface réfléchissante (10) relative à la première source de lumière (8), où les surfaces réfléchissantes (10, 20) sont d'une seule pièce et se composent d'un réflecteur intégral en deux parties (12), qui est mobile par rapport au boîtier principal (4) et à la première source de lumière (8) ; **caractérisées en ce que** les moyens de commande (15) comprennent au moins un joint définissant un point d'appui (P) du réflecteur (12) capable de permettre la rotation du réflecteur dans les deux plans orthogonaux entre eux ; et **caractérisées par le fait que** les moyens de commande (15) contribuent avec le réflecteur (12) en au moins un premier (A) et un second (B) points d'attache, qui en combinaison avec le point d'appui rotatif (P) du réflecteur (12) forment les coins d'un triangle, la seconde source de lumière (18) étant située à un point focal (F2) de la seconde surface réfléchissante (20), le point focal F2 étant aligné avec le point d'appui rotatif (P) du réflecteur (12) et avec le premier point d'attache (A) le long du premier axe de rotation (X) du premier réflecteur (12).

2. Ensemble optique intégré selon la revendication 1, **caractérisé en ce que** le point d'appui rotatif (P) du réflecteur (12) est situé sur un axe (X) comprenant le premier point d'attache (A) et le point focal (F2) de la seconde surface réfléchissante (20) et entre ledit premier point d'attache (A) et le point focal (F2) de la seconde surface réfléchissante (20), la plus proche du dernier.

3. Ensemble optique intégré selon la revendication 1 ou 2, **caractérisé en ce que** la première (8) et la seconde (18) sources de lumière sont maintenues respectivement par un premier (7) et un second support (19), chacun formant partie intégrale du boîtier principal (4), et se prolongeant en porte-à-faux à partir des supports (7, 19) dans une cavité (5) définie par le boîtier principal (4) en direction de l'écran transparent (6).

4. Ensemble optique intégré selon la revendication 1 ou 2, **caractérisé en ce que** la première (8) et la seconde (18) sources de lumière sont maintenues respectivement par un premier (7) et un second (19) support, le premier support (7) la première (8) et la seconde (18) sources de lumière partie intégrale du boîtier principal (4), le second support (19) la première (8) et la seconde (18) sources de lumière partie intégrale du réflecteur (12), les sources de lumière (8, 18) sont prolongées en porte-à-faux depuis les supports (7, 19) dans une cavité (5) définie par le boîtier principal (4) en direction de l'écran transparent (6).

5. Ensemble optique intégré selon la revendication 3 ou 4, **caractérisé en ce que** le réflecteur (12) a une forme telle que la lumière émise par la première source de lumière (8) frappe la première source réfléchissante (10), alors que la lumière émise par la seconde source de lumière (18) frappe ladite seconde surface réfléchissante (20).
